Europäisches Patentamt

European Patent Office

Office européen des brevets

(19)

(11) Veröffentlichungsnummer: **0 202 389**
**B1**

(12) **EUROPÄISCHE PATENTSCHRIFT**

(45) Veröffentlichungstag der Patentschrift: **31.10.90**

(21) Anmeldenummer: **86100872.0**

(22) Anmeldetag: **23.01.86**

(51) Int. Cl.⁵: **C 09 D 177/00,** C 09 D 5/44, C 08 J 3/12 // C08L77/00, C08L77/02

(54) **Verfahren zur Herstellung von pulverförmigen Beschichtungsmitteln auf der Basis von Polyamiden.**

(30) Priorität: **23.03.85 DE 3510691**

(43) Veröffentlichungstag der Anmeldung:
**26.11.86 Patentblatt 86/48**

(45) Bekanntmachung des Hinweises auf die Patenterteilung:
**31.10.90 Patentblatt 90/44**

(84) Benannte Vertragsstaaten:
**AT BE CH DE FR GB IT LI NL SE**

(56) Entgegenhaltungen:
**EP-A-0 014 772**
**FR-A-2 327 283**

(73) Patentinhaber: **HÜLS AKTIENGESELLSCHAFT**
**Patentabteilung / PB 15 - Postfach 13 20**
**D-4370 Marl 1 (DE)**

(72) Erfinder: **Mumcu, Salih, Dr.**
**Leverkusener Strasse 12**
**D-4370 Marl (DE)**
Erfinder: **Winzer, Helmut**
**Mühlenschlade 31**
**D-5950 Finnentrop (DE)**

**Beschreibung**

Gegenstand der Erfindung ist ein Verfahren zur Herstellung von pulverförmigen Beschichtungsmitteln auf der Basis von Polyamiden mit mindestens 10 aliphatischen gebundenen Kohlenstoffatomen pro Carbonamidgruppe oder Copolyamiden oder einer Mischung aus Homo- und Copolyamiden, welche mindestens 70% der genannten Bausteine enthalten, nach dem Fällungsverfahren.

Es is bekannt, pulverförmige Beschichtungsmittel auf Basis von Polyamiden zur Herstellung lackähnlicher Überzüge von Metallen einzusetzen. Die Beschichtung erfolgt nach dem Schmelzüberzugsverfahren, nämlich dem Wirbelsinterverfahren, dem Flammspritzverfahren oder nach dem elektrostatischen Beschichtungsverfahren. Die Polyamidpulver werden erthalten durch Fällen des Polyamids aus Lösungen (am 10.05.51 ausgelegte Unterlagen der deutschen Patentanmeldung S 2805/39b 22/04 oder Äquivalente FR—A—989 062) oder durch Mahlen des Polyamidgranulates, vorzugsweise bei tiefen Temperaturen unter einer Inertgasatmosphäre.

Das Fällungsverfahren der vorgenannten französischen Patentschrift beschreibt das Ausfällen von Polyamidpulvern aus Ethanol durch Abkühlen der heißen Polyamidlösung durch äußere Einwirkung oder durch Abkühlenlassen. Allein durch Abkühlen bzw. Abkühlenlassen der heißen Polyamidlösung werden Pulver mit hohem Feinkornanteil erhalten, die zu Staubauswurf im Wirbelbett führen. Schließlich treten bei einer solchen Arbeitsweise unerwünschte Agglomerate auf, die anschließend durch Zerreiben oder Zermahlen in die erforderliche Pulvergröße überführt werden müssen. Außerdem werden bei einem solchen Verfahren nicht reproduzierbare, d. h. unterschiedliche Chargen erhalten.

Est ist ferner bekannt, Polyamidpulver herzustellen, indem man niedermolekulare Polyamide mahlt und die so erhaltenen Pulver anschließend auf di gewünschte Viskosität bringt, indem man sie in an sich bekannter Weise auf Temperaturen unterhalb des Schmelzpunktes erhitzt (britische Patentschrift 535 138, deutsche Offenlegungsschrift 15 70 392).

Auch Polylaurinlactampulver werden nach diesen bekannten Verfahren hergestellt und nach den ebenfalls bekannten Verfahren zum beschichten eingesetzt (Chem. Ind. November 1968, S. 783 bis 791; Modern Plastics, Februar 1966, S. 153 bis 156). Da Polylaurinlactampulver nicht immer den geforderten Bedingungen hoher Elastizität, guter Kantenbeschichtung, glatter Oberfläche, Beständigkeit gegenüber alkalischen wäßrigen Lösungen genügen und vielfach bei der Verarbeitung insbesondere zum Qualmen neigen, sind die verschiedenartigsten Verbesserungen bekanntgeworden, wie weichmacherhaltige Polylaurinlactampulver (deutsche Auslegeschrift 16 69 821), solche aus einem Gemisch aus Homopolylaurinlactam und laurinlactamhaltigen Copolyamiden (deutsche Auslegeschrift 21 44 606), solche, die N-alkoximethylgruppenhaltige Polyamide neben sauer reagierenden Katalysatoren enthalten (deutsche Offenlegungsschrift 22 22 122), oder Gemische aus Polyamiden mit 8 bis 11 aliphatisch gebundenen Kohlenstoffatomen pro Carbonamidgruppe, alkoxialkylgruppentragenden Aminoplasten und sauer reagierenden Katalysatoren (deutsche Offenlegungsschrift 22 22 123). Diese Pulver zeigen in einzelnen Fällen gute Eigenschaften, genügen jedoch noch nicht voll allen geforderten Bedingungen.

Ein verbessertes Verfahren wird in der deutsche Auslegeschrift 25 45 267 beschrieben. Dieses Verfahren befriedigt insofern noch nicht vollständig, da zur Herstellung von pigmentfreien Pulvern ein Mahlverfahren angewendet und zur Herstellung von pigmentierten Pulvern das Fällungsverfahren betrieben werden muß. Schließlich ist für das Gelingen dieses Verfahrens Voraussetzung, Polylaurinlactamgranulate einzusetzten, welche ausschließlich durch hydrolytische Polymerisation in Gegenwart bestimmter Mengen Phosphorsäure hergestellt worden sind.

Ein wesentlichen verbessertes Verfahren wird in der EP—B1—0 014 772 bzw. der äquivalenten DE—B—29 06 647 beschrieben.

Dieses Verfahren ·hat den Nachteil, daß die Fällungszeiten relativ lang sind und auch ihre mechanischen Eigenschaften noch verbesserungswürdig sind.

Aufgabe der Erfindung ist es daher, ein Verfahren aufzufinden, das zu Beschichtungsmitteln mit mindestens gleich guten Eigenschaften führt, d. h. daß die pulverförmig aufbringbaren Beschichtungsmittel oberhalb ihrer Filmbildungstemperatur ohne Erzeugen von störendem Qualm Überzüge mit glatter Oberfläche, guter Kantenbeschichtung, guter Elastizität und ausgezeichneter Beständigkeit gegenüber alkalischen wäßrigen Lösungen liefern. Zudem sollten die gezeigten Nachteile hinsichtlich der notwendigen Verfahrensmaßnahmen Fällung oder Mahlen, Verwenden von Homopolylaurinlactam bestimmter Herstellungsart vermieden werden und schließlich sollte eine wesentlich kürzere Fällungszeit unter zwei Stunden erreicht werden.

Die Lösung dieser Aufgabe gelingt durch das Verfahren wie im Anspruch angegeben.

Einsetzbare Polyamide für das Verfahren sind demnach Polyundecansäureamid, Polylaurinlactam (11 aliphatisch gebundene Kohlenstoffatome pro Carbonamidgruppe) und Polyamide mit mehr als 11 aliphatisch gebundenen Kohlenstoffatomen pro Carbonamidgruppe, vorzugsweise Polylaurinlactam. Außerdem können die entsprechenden Copolyamide eingesetzt oder Mischungen aus Homo- und Copolyamiden eingesetzt werden, die mindestens 70 Gewichtsprozent der genannten Bausteine enthalten. Als Comonomere können sie demnach 0 bis 30 Gewichtsprozent eines oder mehrerer Comonomerer, wie Caprolactam, Hexamethylendiamin, 2-Methylpentandiamin-(1,5), Octamethylendiamin-(1,8), Dodecamethylendiamin, Isophorondiamin, Trimethylhexamethylendiamin, Adipinsäure, Korksäure, Azelainsäure, Sebacinsäure, Dodecandisäure, Aminoundecansäure enthalten. Die im folgenden als Polyamide bezeichneten genannten Homo- oder Copolyamide werden als Granulate oder Schrot eingesetzt, die eine relative Lösungsviskosität zwischen 1,4 und 1,8 (gemessen in 0,5% m-Kresollösung bei 25°C) besitzen. Vorzugsweise werden sie erhalten durch hydrolytische Polymerisation; es können jedoch auch solche verwendet werden, die nach der aktivierten anionischen oder acidolytischen Polymerisation hergestellt worden waren. Die nach der hydrolytischen Polymerisation erhaltenen Polyamide können im Molekulargewicht geregelt oder ungeregelt hergestellt worden sein, d. h. in Abwesenheit jeglicher Kettenstabilisatoren, wie Essigsäure, Benzoesäure, Adipinsäure, Azelainsäure, Sebacinsäure, Dodecandisäure.

Vorteilhaft verwendet man als Polylaurinlactam ein solches, welches in Gegenwart von 0,3 bis 0,7 Gewichtsprozent Phosphorsäure, 2 bis 10 Gewichtsprozent Wasser bei Temperaturen zwischen 265 und 300°C in Abwesenheit jeglicher Kettenstabilisatoren unter Eigendruck hergestellt worden war. Es ist auch möglich, Phosphonsäure nach der Fällung zuzusetzen. Der gesamte Phosphorsäuregehalt kann bis zu 1 Gewichtsprozent betragen, wobei diese Menge erreicht werden kann durch teilweise Zugabe während der Polymerisation als Katalysator und teilsweise Zugabe nach der Fällung oder auch durch alleinige Zugabe nach der Fällung. Zweckmäßigerweise wird eine Extraktion mit Ethanol oder Methanol vorgeschaltet.

Als Lösemittel für das Fällungsverfahren gemäß der Erfindung wird ausschließlich Ethanol verwendet. Als Ethanol kann hierbei neben wasserfreiem Ethanol der übliche Alkohol eingesetzt werden, der bis zu 10 Gewichtsprozent Wasser und die üblichen Vergällungsmittel, wie z.B. Methylethylketon, Petrolether, Pyridin, enthalten kann. Das Ethanol wird mindestens in der doppelten Gewichtsmenge des Polyamids eingesetzt. Vorteilhaft beträgt sie bie Wirbelsinterpulvern das zwei- bis fünffache und bei Elektrostatikpulvern das vier- bis siebenfache, insbesondere etwa das vier- bzw. 5,6fache. Mit anderen Worten beträgt die Konzentration des Polyamids in der Lösung 35 Gewichtsprozent, vorteilhaft 25 bis 15, insbesondere etwa 20 bzw. 15 Gewichtsprozent. In diesen Konzentrationsbereichen erhält man ab der Fällung gut rührbare Suspensionen und außerdem eine gute Wärmeabführung.

Zur Durchführung des Verfahrens wird die Mischung aus Polyamid und Ethanol, zweckmäßigerweise in mantelbeheizten Rührkesseln auf die Lösetemperatur gebracht; diese liegt zwischen 140 und 150°C, vorzugsweise um 145±2°C. Die Aufheizgeschwindigkeit ist nicht kritisch. Das Aufheizen kann über Wärmeträger im Mantel oder vorteilhaft mit Hilfe von Niederdruckdampf oder auch Hochdruckdampf bei größeren Kesselvolumina erfolgen. Die Rührgeschwindigkeit während des Lösevorganges hat keinen Einfluß auf die Korngrößenverteilung.

Anschließend wird die Lösung unter Rühren bei Manteltemperaturen von 122 bis 125°C und im wesentlichen durch Abdestillieren von Ethanol unter Eigendruck abgekühlt. Das Abführen des kalten Kondensates erfolgt mit einer Geschwindigkeit, daß die Lösung um mindestens 10°C, vorzugsweise um 20°C pro Stunde abgekühlt wird. Während dieser schnellen Abkühlungsphase wird ab Erreichen einer Innentemperatur von höchstens etwa 125°C (Sättigungsgrenze) die Manteltemperatur höchstens 3°C tiefer eingestellt. Damit wird die Keimbildung an der Wand vermieden und außerdem verhindert, daß die Fällung zu früh beginnt.

Ab dieser Innentemperatur von etwa 125°C wird die Manteltemperatur im Gleichschritt mit der Temperatur der Lösung (Innentemperatur) auf die Fällungstemperatur abgekühlt, wobei man darauf achtet, daß auch in dieser Phase die Manteltemperatur maximal 3°C tiefer liegt als die der Lösung. Die Keimbildung erfolgt hierbei hauptsächlich innerhalb der Lösung.

Auch während dieser Phase wird Ethanol abdestilliert. Die Fällungstemperatur kann somit wesentlich herabgesetzt werden; sie liegt unabhängig von der Kesselgröße innerhalb des Bereiches von 90 bis 113, vorzugsweise innerhalb von 100 bis 112°C.

Die Fällungstemperatur zeigt sich an durch den Knick in der Abkühlungskurve (Einschwenken der Kurve auf die Horizontale). In der Fällungsphase, die wesentlich unterhalb zwei Stunden, insbesondere im Bereich von 5 bis 60 Minuten liegt, wird vorzugsweise isotherm gearbeitet, d. h. die freiwerdende Kristallisationswärme wird allein durch weiteres Abdestillieren von Ethanol abgeführt. Unter isothermen Bedingungen wird hierbei verstanden, daß die Innentemperatur in der Fällungsphase nicht über 0,3°C ansteigt, vorzugsweise liegt diese Temperaturdifferenz maximal bei 0,2°C. Das Ende der Fällungsphase wird sichtbar an der stark abfallenden Innentemperatur (Knick in der Abkühlungskurve). Am Ende der Fällungsphase liegt maximal 30% des eingesetzten Polyamids in gelöster Form vor. Diese Menge ist stark abhängig von der Zusammensetzung des Polyamids.

Die wesentlich schneller Fällung wird unter Eigendruck vorgenommen. Es ist also ein zusätzlicher Innendruck zum Vermeiden des Siedens nicht erforderlich. Überraschenderweise schließt die stark übersättigte Lösung bei schneller Fällung und schnellem Kornwachstum keine Lösemittel ein, was zu glatteren Überzügen führt.

Die mittlere Korngröße und die Korngrößenverteilung werden hauptsächlich durch die Rührerdrehzahl in der Abkühl- und Fällphase bestimmt. Geeignete Rührorgane sind Propellerrührer, Balkenrührer, Ankerrührer und Blattrührer, vorzugsweise Blattrührer, die in der Drehzahl variierbar sind. Die Abmessungen der Blattrührer liegen im Bereich Durchmesser Reaktor zu Durchmesser Rührblatt 2:1.

Zur Herstellung von Wirbelsinterpulvern mit Korngrößen 95% zwischen 40 und 250 µm wird eine niedrige Drehzahl gewählt. Vorzugsweise wird ab Beginn der Fällung die Drehzahl um 20 bis 30 Upm erhöht, um eine teilweise Agglomeration der entstehenden Körner zu vermeiden. Für die feineren Elektrostatikpulver (100% < 100 µm) sollte das Strömungsbild turbulent sein, was durch hohe Rührerdrehzahlen und geeignete Strombrecher erreicht wird.

Bei vergleichbarer Korngrößenverteilung der Pulver kann mit Rührerdrehzahlen gearbeitet werden, die etwa doppelt so hoch sein können, wie beim Verfahren des Standes der Technik (EP—PS 0 014 772). Nach der Fällungsphase kann — ohne Gefahr einer Polymerfilmbildung an der Reaktorwand — mit Mantelkühlung gearbeitet werden.

Die Suspension wird bis zu bei 20% Ethanolfeuchte einsetzenden Rieselfähigkeit des Produktes unter vermindertem Druck, Wandtemperaturen unterhalb 100°C sowie schonender mechanischer Bewegung, z. B. in langsam laufenden Schaufel- oder Taumeltrocknern getrocknet, um Grobgutbildung durch Agglomeration zu vermeiden. Nach Erreichen der Rieselfähigkeit kann die mechanische Bewegung intensiver werden und die Temperatur im Trockner auf über 100°C bis zu 150°C angehoben werden.

Die typische durchschnittliche Korngrößenverteilung für Wirbelsinterpulver ist dadurch charakterisiert, daß mindestens 99,5% des eingesetzten Polyamids in dem Korngrößenbereich zwischen 40 und 250 μm vorliegt.

Bei typischen Korngrößenverteilungen von Elektrostatikpulvern liegt 100% des eingesetzten Polyamids im Korngrößenbereich unter 100 μm vor.

Nach dem Verfahren der Erfindung gelingt es somit wahlweise, sowohl Wirbelsinterpulver als auch Elektrostatikpulver herzustellen. Die Pulver zeigen bei der Beschichtung von Metallen ausgezeichnete Eigenschaften hinsichtlich Dehnbarkeit und Kantenbeschichtung, als auch Beständigkeit gegenüber alkalischen wäßrigen Lösungen.

Außerdem qualmen die erhaltenen Pulver bei der Verarbeitung nicht. Bei der Fällung ensteht kein Grobgut. Bei der Aufarbeitung im Trockner kann eine gewisse Vergröberung eintreten, die jedoch von Vorteil ist, weil der Feinkornanteil in den Wirbelsinterpulvern noch verringert wird oder praktisch ganz verschwindet. Aus Sicherheitsgründen kann eine Schutzabsiebung nachgeschaltet werden, um bei Wirbelsinterpulvern gegebenenfalls entstandene Anteile > 250 μm und bei Elektrostatikpulvern solche > 100 μm zu entfernen. Bei Wirbelsinterpulvern kann gegebenenfalls ein noch störender Feinkornanteil z. B. in Zentrifugalwindsichtern abgetrennt werden.

Die Fällung kann auch in Gegenwart von Pigmenten, wie Titandioxid, Ruß, $BaSO_4$, ZnS, Cadmiumrot, Eisenoxid oder Stabilisatoren, wie 4-Hydroxi-3,5-di-tert.-butyl-phenylpropionsäure, 4-Hydroxi-3,5-di-tert.-butyl-phenyl-propionsäure-hexamethylendiamin-bisamid, -propionsäureester mit einem aliphatischen Alkohol mit 1 bis 18 C-Atomen, Tris-alkylphenyl-, Tris-alkyl-, Tris-aryl- oder gemischten Estern der phosphorigen Säure, deren Alkylrest 1 bis 16 C-Atome enthält und geradkettig oder verzweigt ist, oder in Gegenwart von Tensiden vorgenommen werden.

## Beispiel 1

400 kg in Gegenwart von 0,5 Gewichtsprozent Phosphorsäure hergestelltes Polyamid 12 mit einem Extraktgehalt von 0,6 Gewichtsprozent und einer relativen Lösungsviskosität von 1,60 werden zusammen mit 2500 l Ethanol (vergällt mit Methylethylketon), Wassergehalt 1 Gewichtsprozent, in einem 3 m³-Reaktor (d = 1600 mm) auf 145°C aufgeheizt. Anschließend wird die Manteltemperatur auf 124°C eingestellt und die Lösung bei der Rührerdrehzahl (Blattrührer, d = 800 mm) 50 Upm durch Destillation des Ethanols in eine externe Vorlage mit einer mittleren Geschwindigkeit von 19°C pro Stunde abgekühlt. Ab der Innentemperatur 125°C wird die Manteltemperatur so geregelt, daß sie nicht mehr als 3°C unter der Innentemperatur liegt.

Bei der Innentemperatur 109°C beginnt die Fällung, welche sich durch einen Anstieg der Innentemperatur bemerkbar macht. Zu Beginn dieser Fällungsphase wird die Rührerdrehzahl auf 70 Upm erhöht und die Destillationsleistung so weit gesteigert, daß die Innentemperatur bis zum Fällungsende, welches sich durch starke Abnahme der Innentemperatur deutlich macht, bei 109 ± 0,3°C bleibt. Die Fällung dauert 20 Minuten (die abdestilliert Menge an Ethanol beträgt insgesamt 650 l). Anschließend wird die Destillation abgestellt und die entstandene Suspension über den Reaktormantel auf 45°C abgekühlt und in einem Schaufeltrockner bis auf eine Restfeuchte von 0,15 Gewichtsprozent getrocknet.

Die mittels Bildanalysator gemessene Korngrößenverteilung lautet:

<40 μm 0,3 Gewichtsprozent

<80 μm 20 Gewichtsprozent

<120 μm 80 Gewichtsprozent

<160 μm 99 Gewichtsprozent

<200 μm 100 Gewichtsprozent

Mit dem Pulver werden an 1 mm-Blechen, die zuvor in einem Umluftofen auf 380°C erhitzt wurden, 300 μm starke Wirbelsinterüberzüge hergestellt.

In der Tabelle sind die Versuchsergebnisse aus den Beispielen und Vergleichsbeispielen zusammengestellt. Es ist zu ersehen, daß bei Fällungszeiten unter 2 Stunden Pulver mit guten Überzugseigenschaften erhalten werden.

## Beispiel 2

Hierbei wird entsprechend dem Beispiel 1 verfahren, jedoch die Abkühlgeschwindigkeit auf 10°C pro Stunde eingestellt. Um von der Korngrößenverteilung her dem Beispiel 1 zu entsprechen, wird die Rührerdrehzahl in der Abkühlphase bei 35 Upm gehalten. Die Fällungszeit bei 113°C beträgt 1 Stunde und 50 Minuten.

Vergleichsbeispiel 1

Die Fällungszeit liegt bei 5 Stunden.

Vergleichsbeispiel 2

Die Fällungszeit liegt bei 8 Stunden.

Vergleichsbeispiel 3
(entsprechend Beispiel 1 EP—B1—0 014 772)
Beim Erreichen der Innentemperatur von 117°C wird die Drehzahl auf 20 Upm, die Manteltemperatur auf 111,5°C eingestellt und 2 bar Stickstoff auf die Lösung aufgedrückt.
Die Abkühlkurven zu den Beispielen und Vergleichsbeispielen sind dem Diagramm zu entnehmen.

## Tabelle

| | Rührerdreh-zahl in der Abkühlphase | Abkühl-geschwin-digkeit | Fällungs-zeit | Fällungs-temperatur $^{o}C$ | Erichsen-tiefung | Schlag-tiefung mm/7,6 kg |
|---|---|---|---|---|---|---|
| Beispiel 1 | 50 | 19 $^{o}$C/h | 20 min | 109 | > 10 mm | > 1800 |
| Beispiel 2 | 35 | 10 | 1 Std. 50 min | 113 | > 10 | > 1800 |
| Vergleichs-beispiel 1 | 30 | 8 | 5 Std. | 115 | < 8 | < 1000 |
| Vergleichs-beispiel 2 | 26 | 6 | 8 Std. | 116 | 6 – 8 | < 900 |
| Vergleichs-beispiel 3 | 20 | 8 | 12 Std. | 116 – 117 | < 8 | < 600 |

EP 0 202 389 B1

INNENTEMPERATUR [°C]

B1 = BEISPIEL 1

B2 = BEISPIEL 2

V1 = VERGLEICHSBEISPIEL 1

V2 = VERGLEICHSBEISPIEL 2

V3 = VERGLEICHSBEISPIEL 3

DIAGRAMM : VERLAUF DER INNENTEMPERATUR IN DER ABKÜHL- UND
FÄLLUNGSPHASE

7

# EP 0 202 389 B1

**Patentansprüche**

1. Verfahren zur Herstellung von Beschichtungspulvern auf der Basis von Polyamiden mit mindestens 10 aliphatisch gebundenen Kohlenstoffatomen pro Carbonamidgruppe oder Copolyamiden oder einer Mischung aus Homo- und Copolyamiden, welche mindestens 70% der genannten Bausteine enthalten nach dem Fällungsverfahren in Gegenwart von Ethanol als Lösemittel, wobei die bei 130 bis 150°C hergestellte Lösung unter Vermeiden von örtlichen Unterkühlungen auf die zwischen 100 und 125°C liegende Fällungstemperatur eingestellt wird ohne weitere Wärmezufuhr unter Unterdrücken des Siedens unter einer Inertgasatmosphäre mit einer Rührerdrehzahl entsprechend der Korngröße der gewünschten Teilchen bis zur Beendigung der Teilchenbildung gerührt wird, wobei während der Fällung eine polytrope Phase mit einem Temperaturanstieg von 0,5 bis 3°C eingehalten wird und schließlich aus der abgekühlten Suspension die Pulverkörner erhalten werden, dadurch gekennzeichnet, daß die heiße Lösung unter Rühren und unter Abdestillieren von Ethanol unter Eigendruck rasch bis zur Sättigungsgrenze (ca. 125°C) abgekühlt wird und in der anschließenden weiteren Abkühlungsphase bis zum Einstellen der Fällungstemperatur im Bereich von 90 bis 113°C unter weiterem Abdestillieren von Ethanol die Manteltemperatur im Gleichschritt mit der Temperatur der Lösung eingestellt wird, derart, daß die Manteltemperatur maximal 3°C tiefer liegt und schließlich in der anschließenden Fällungsphase durch weiteres Abdestillieren von Ethanol die Lösung isotherm gehalten wird.

2. Verfahren nach Anspruch 1, dadurch gekennzeichnet, daß man die Lösung durch Destillation des Ethanols mit einer Geschwindigkeit von mindestens 10°C pro Stunde abkühlt.

3. Verfahren nach den Ansprüchen 1 und 2, dadurch gekennzeichnet, daß man die Manteltemperatur in der Abkühlphase so lange bei 122 bis 125°C hält, bis die Innentemperatur 125°C erreicht, und unterhalb von 125°C bis zum Ende der Fällung die Manteltemperatur der Innentemperatur so anpaßt, daß die erstere maximal 3°C unter der Innentemperatur liegt.

**Revendications**

1. Procédé de préparation de poudres d'enduction à base de polyamides comportant au moins 10 atomes de carbone aliphatiquement liés par groupe carboxylamide ou à base de copolyamides ou à base d'un mélange d'homo-polyamides et de copolyamides qui renferment au moins 70% des motifs indiqués, selon le procédé de précipitation en présence d'éthanol en tant que solvant, tandis que la solution préparée à une température de 130 à 150°C est ajustée, en évitant des sous-refroidissements locaux, à la température de précipitation se situant entre 100 et 125°C sans autre apport de chaleur, en empêchant l'ébullition sous une atmosphère gazeuse inerte, avec une vitesse de rotation de l'agitateur correspondant à la grosseur de grain des particules désirées, jusqu'à cessation de la formation de particules, alors que pendant la précipitation on maintient une phase polytrope avec une montée de température de 0,5 à 3°C et qu'on obtient finalement les grains de poudre à partir de la suspension refroidie, ledit procédé étant caractérisé par le fait que tout en agitant et en éliminant l'éthanol par distillation sous la pression propre, on refroidit rapidement la solution chaude jusqu'à la température de saturation (environ 125°CV) et que, dans l'autre phase de refroidissement qui suit, on ajuste la température de la chemise concommitamment avec la température de la solution jusqu'à établir la température de précipitation dans un domaine de 90 à 113°C en poursuivant l'élimination de l'éthanol par distillation, ce de manière que la température de la chemise se situe au maximum 3°C au-dessous et que finalement, dans la phase de précipitation subséquente, la solution soit maintenue isotherme par poursuite l'élimination de l'éthanol par distillation.

2. Procédé selon la revendication 1, caractérisé par le fait l'on refroidit la solution par distillation de l'éthanol à une vitesse d'au moins 10°C par heure.

3. Procédé selon les revendications 1 et 2, caractérisé par le fait que lors de la phase de refroidissement on maintient la température de la chemise à une valeur de 122 à 125°C jusqu'à ce que la température interne atteigne 125°C, et qu'au dessous de 125°C jusqu'à la fin de la précipitation, on adapte la température de la chemise à la température interne de manière que la première se situe au maximum 3°C au-dessous de la température interne.

**Claims**

1. A process for the preparation of powder coating compositions based on polyamides having at least 10 aliphatically bonded carbon atoms per carboxamide group or on copolyamides, or on a mixture of homo- and copolyamides, which contain at least 70% of the above-mentioned building blocks, by the precipitation process in the presence of ethanol as the solvent, in which process the solution which has been prepared at 130 to 150°C is adjusted, while avoiding local undercooling, to the precipitation temperature of between 100 and 125°C without the further introduction of heat while suppressing boiling, under an inert gas atmosphere, the solution is stirred at a stirrer speed corresponding to the particle size of the desired particles until particle formation has ceased, and during the precipitation a polytropic phase, accompanied by a temperature increase of 0.5 to 3°C, is maintained, and finally the powder particles are obtained from the cooled suspension, characterized in that the hot solution is rapidly cooled to the saturation limit (about 125°C), while stirring and while distilling off ethanol und autogenous pressure, and

8

in the subsequent further cooling phase until the precipitation temperature in the range of 90 to 113°C has been reached, and while continuing to distil off ethanol, the jacket temperature is adjusted in parallel with the temperature of the solution in such a way that the jacket temperature is at most 3°C lower, and finally, in the subsequent precipitation phase, the solution is kept isothermal by continuing to distil off ethanol.

2. A process according to claim 1, characterized in that the solution is cooled at a rate of at least 10°C per hour by distilling off ethanol.

3. A process according to either of claims 1 and 2, characterized in that the jacket temperature in the cooling phase is kept at 122 to 125°C until the internal temperature reaches 125°C, and below 125°C until precipitation has ceased, the jacket temperature is adjusted relative to the internal temperature so that the jacket temperature is at most 3°C below the internal temperature.